(19) Europäisches Patentamt
European Patent Office
Office européen des brevets

(11) Veröffentlichungsnummer: **0 230 243 B1**

(12) # EUROPÄISCHE PATENTSCHRIFT

(45) Veröffentlichungstag der Patentschrift: **07.03.90**

(51) Int. Cl.⁴: **C07F 9/53**

(21) Anmeldenummer: **87100276.2**

(22) Anmeldetag: **12.01.87**

(54) **Verfahren zur Herstellung bifunktioneller tertiärer aromatischer Phosphansulfide.**

(30) Priorität: **17.01.86 DE 3601247**

(43) Veröffentlichungstag der Anmeldung: **29.07.87 Patentblatt 87/31**

(45) Bekanntmachung des Hinweises auf die Patenterteilung: **07.03.90 Patentblatt 90/10**

(84) Benannte Vertragsstaaten: **BE CH DE FR GB IT LI**

(56) Entgegenhaltungen:
**EP-A- 0 170 102**
**DE-A- 2 743 848**
**DE-C- 1 238 024**

(73) Patentinhaber: **HOECHST AKTIENGESELLSCHAFT, Postfach 80 03 20, D-6230 Frankfurt am Main 80(DE)**

(72) Erfinder: **Weiss, Erwin, Dr., Vorderheide 1, D-6238 Hofheim am Taunus(DE)**
Erfinder: **Kleiner, Hans-Jerg, Dr. Ing., Altkönigstrasse 11a, D-6242 Kronberg/Taunus(DE)**

EP 0 230 243 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Bifunktionelle tertiäre aromatische Phosphansulfide sind u.a. die Bis-(4-halogenphenyl)-phenyl-phosphansulfide der Formel

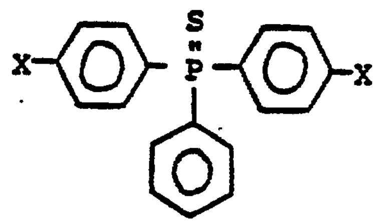

worin X = Halogen.

Sie sind wertvolle End- und Zwischenprodukte auf verschiedenen Sachgebieten.

Endprodukte sind Bis-(4-halogenphenyl)-phenyl-phosphansulfide (und -oxide),die z.B. auf dem Pflanzenschutzsektor als Insektizide und Akarizide (DE-OS 27 43 848 = US-PS 4 101 655) einsetzbar sind.

Zwischenprodukte sind die Verbindungen z.B. auf dem Polymerensektor. Zum Einsatz auf diesem Gebiet müssen die Verbindungen zunächst (auf oxidativem Weg) in die entsprechenden Phosphanoxide überführt werden, die dann mit bestimmten Bisphenolen zu wertvollen Polymeren kondensierbar sind (DE-OS 32 03 186), z.B.:

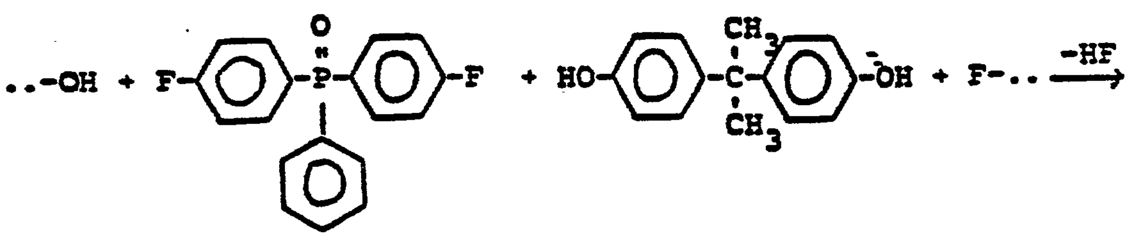


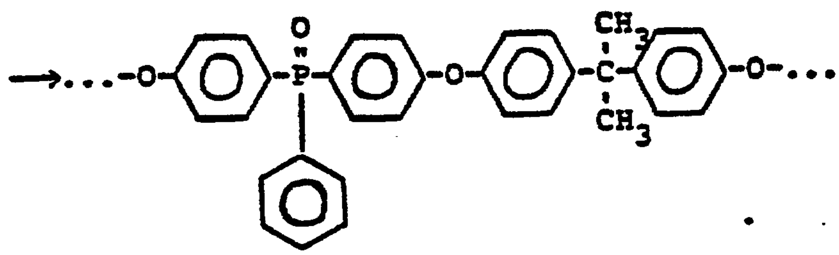

Die Polymeren zeichnen sich durch besondere Schwerbrennbarkeit und extreme thermische Belastbarkeit aus; sie sind zu Fasern, Folien und Formkörpern etc. verarbeitbar.

Die Bis-(4-halogenphenyl)-phenyl-phosphansulfide können - wie in der vorerwähnten DE-OS 27 43 848 angegeben - z.B. durch Grignard-Reaktion von Dichlor-phenyl-phosphan mit Halogenphenylmagnesiumhalogenid sowie anschließender Umsetzung mit elementarem Schwefel hergestellt werden entsprechend den nachstehenden Reaktionsgleichungen (schematisch):

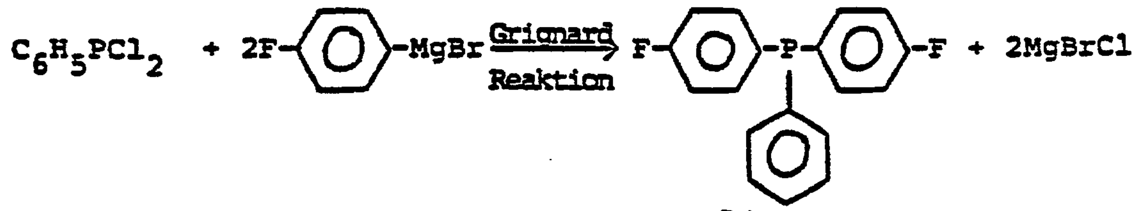


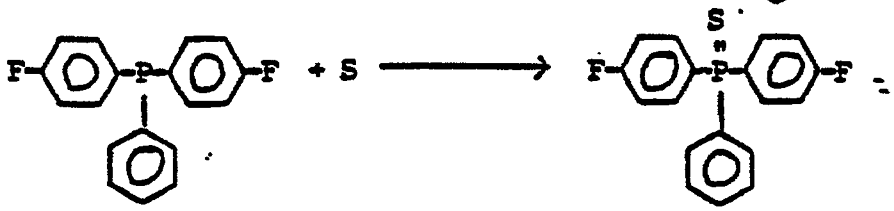

Wenn man in der zweiten Reaktionsstufe anstelle des elementaren Schwefels Wasserstoffperoxid $H_2O_2$ einsetzt, gelangt man gleich zu den entsprechenden Phosphanoxiden:

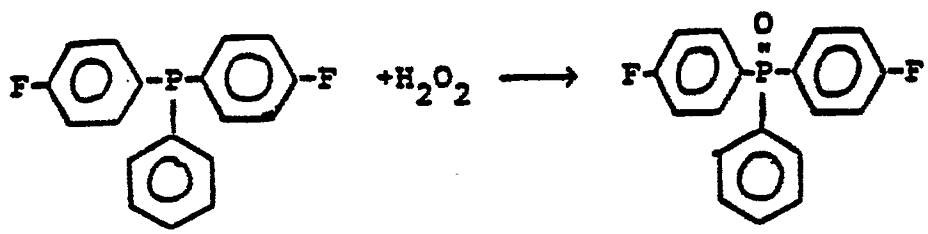

Die Phosphanoxide können alternativ auch durch Grignard-Reaktion von Phenylphosphonsäuredichlorid mit Halogenphenylmagnesiumhalogenid erhalten werden:

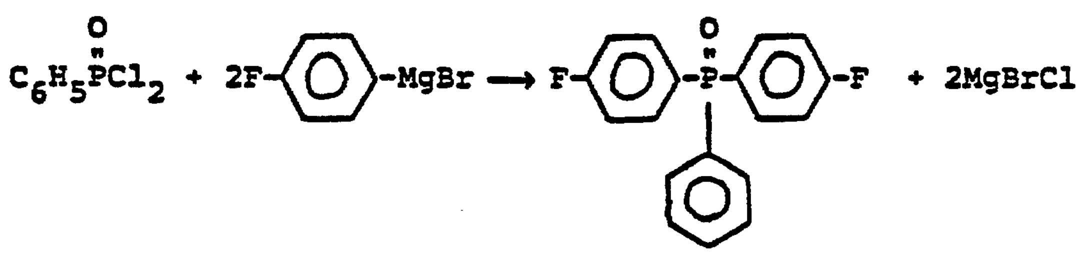

Schließlich ist die Herstellung von arylierten Phosphorthioverbindungen wie von Bis-(4-halogenphenyl)-phenylphosphansulfiden auch nach dem Verfahren der DE-PS 1 238 024 möglich durch Friedel-Crafts-Reaktion von Phosphorthiohalogenid-Verbindungen wie von Phenylthiophosphonsäuredichlorid $C_6H_5P(S)Cl_2$ mit aromatischen Verbindungen wie von Halogenbenzolen in Gegenwart einer mindestens äquimolaren Menge eines Friedel-Crafts-Katalysators (insbesondere von $AlCl_3$), bezogen auf die Phosphorthiohalogenid-Verbindung,
und mit einer mindestens äquimolaren Menge der aromatischen Verbindungen, bezogen auf die zu ersetzenden Halogenatome,
mit nachfolgender Zersetzung der entstandenen Katalysatorkomplexverbindung mit Wasser, Eis oder in an sich bekannter Weise durch Zusatz einer Verbindung, die mit dem Katalysator einen stärkeren Komplex bildet als die zu iso lierende Phosphorthioverbindung. Für den Fall etwa der Herstellung des Bis-(4-fluorphenyl)-phenyl-phosphansulfids nach diesem Verfahren wäre die entsprechende Reaktionsgleichung:

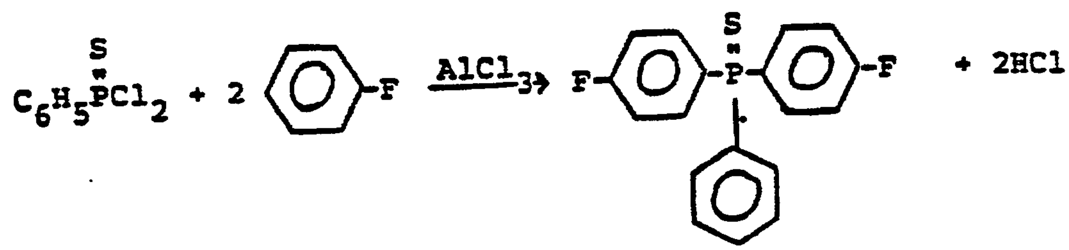

Die Herstellung dieser Verbindung sowie auch anderer Bis-(4-halogenphenyl)-phenyl-phosphansulfide ist jedoch in der genannten DE-PS nicht durch Beispiele belegt. Die einzigen Beispiele, die sich auf die Umsetzung mit einem Halogenbenzol beziehen, sind die Beispiele 7, 8 und 9 (Umsetzung von $PSCl_3$ mit Chlorbenzol) sowie 15 und 16 (Umsetzung von $PSCl_3$ mit Fluorbenzol).

Nach Beispiel 7 werden Phosphorthiochlorid $PSCl_3$, $AlCl_3$ und Chlorbenzol $C_6H_5Cl$ im Molverhältnis 1:5,33:6,67 7 Stunden am Rückfluß erhitzt. Als Ausbeute werden 64 %, bezogen auf eingesetztes $PSCl_3$, Tris-(chlorphenyl)-phosphansulfid $PS(C_6H_4Cl)_3$ angegeben; das Produkt soll gemäß dem IR-Spektrum aus etwa gleichen Teilen des o- und des p-Isomeren bestehen.

In Beispiel 8 beträgt das Molverhältnis $PSCl_3$:$AlCl_3$:$C_6H_5Cl$ = 1:2:4. Nach 1 1/4 Stunden Erhitzen am Rückfluß sollen erhalten worden sein:

63,2 % Bis-(chlorphenyl)-thiophosphinsäurechlorid $(C_6H_4Cl)_2P(S)Cl$ (nach Umkristallisation), sowie eine nicht unbeträchtliche Menge eines Rückstandes, der aus einer Mischung aus isomeren Tris-(chlorphenyl)-phosphansulfiden $(C_6H_4Cl)_3PS$ bestanden haben soll.

In Beispiel 9 war das Verhältnis $PSCl_3$:$AlCl_3$:$C_6H_5Cl$ = 1:2,5:1. Nach einstündigem Erhitzen zum Rückfluß sollen erhalten worden sein:

45,4 % Chlorphenyl-thiophosphonsäuredichlorid $(C_6H_4Cl)P(S)Cl_2$,
19,7 % Bis-(chlorphenyl)-thiophosphinsäurechlorid $(C_6H_4Cl)_2P(S)Cl$ als Isomerengemisch, und
18,3 % Tris-(chlorphenyl)-phosphansulfid $(C_6H_4Cl)_3P(S)$.

Von Isomerengemischen wird nur bei dem Produkt des Beispiels 7, dem Rückstand des Beispiels 8 und der Mittelfraktion des Beispiels 9 gesprochen. Es ist jedoch kaum vorstellbar, daß die anderen Chlorphenyl-Produkte dann etwa frei von Isomeren waren. Daher ist wohl bei allen Reaktionsprodukten von entsprechenden Isomerengemischen auszugehen.

Nach Beispiel 15 wurden $PSCl_3$, $AlCl_3$ und Fluorbenzol $C_6H_5F$ im Molverhältnis 1:5,33:6,67 4 Stunden zum Rückfluß erhitzt. Es sollen 79,5 % praktisch von Isomeren freies Bis-(4-fluorphenyl)-thiophosphinsäurechlorid $(C_6H_4F)_2P(S)Cl$ mit nur einer Spur des o-Isomeren sowie ein geringfügiger Rückstand erhalten worden sein.

In Beispiel 16 betrug das Molverhältnis von $PSCl_3$:$AlCl_3$:$C_6H_5F$ = 1:2,2:1,1. Ergebnis nach 1 3/4-stündigem Erhitzen zum Rückfluß:

23,2 % praktisch reines Fluorphenyl-thiophosphonsäuredichlorid $(C_6H_4P)P(S)Cl_2$,
14,2 % Bis-(fluorphenyl)-thiophosphinsäurechlorid $(C_6H_4F)_2P(S)Cl$ (ohne Angabe der Isomerenreinheit) sowie
eine nicht ganz unbeträchtliche Menge eines braunen Rückstandes.

Um aus den nach diesen Beispielen in mehr oder weniger hohen Ausbeuten erhaltenen Bis-(4-halogenphenyl)-thiophosphin-säurechloriden die Bis-(4-halogenphenyl)-phenyl-phosphansulfide zu bekommen, müßte man die Bis-(4-halogenphenyl)-thiophosphinsäurechloride nach ihrer Isolierung und gegebenenfalls Abtrennung von den Isomeren wohl einer weiteren Friedel-Crafts-Reaktion mit Benzol unterwerfen.

Aus den Phosphansulfiden könnte man dann die für den Polymerensektor erforderlichen Phosphanoxide durch Umsetzung z.B. mit $SOCl_2$ oder mit Oxidationsmitteln wie mit $KMnO_4$ gewinnen; vgl. etwa den Artikel von L.Maier - dem Erfinder auch des vorerwähnten DE-Patents 1 238 024 - in Helvetica Chimica Acta 47, S. 120 - 132, insbesondere S. 124 (1964). Mit besonderem Vorteil können tertiäre Phosphansulfide auch nach dem Verfahren der EP-OS 170 101 oder der europäischen Patentanmeldung 86112091.3 (HOE 85/F 193) mittels $H_2O_2$ in die entsprechenden Phosphanoxide überführt werden. Das Verfahren der EP-OS 170 101 arbeitet in einem zu mindestens aus etwa 20 Gew.-% niederen aliphatischen Carbonsäuren und/oder deren Anhydriden (Rest: andere inerte Lösungsmittel) bestehenden Lösungsmittel; beim Verfahren der zweiten Patentanmeldung wird ein Lösungsmittel verwendet, welches zu etwa 2 bis 20 Gew.-% aus - gegebenenfalls halcgenierten - niederen aliphatischen Carbonsäuren und zum Rest aus ein- und/oder mehrwertigen aliphatischen oder cycloaliphatischen Alkoholen - gegebenenfalls im Gemisch mit anderen inerten Lösungsmitteln, welche mit der Carbonsäure/Alkoholmischung mischbar sind - besteht.

Der Umweg über die tertiären aromatischen Phosphansulfide zu den entsprechenden Phosphanoxiden ist hier deswegen erforderlich, weil die Friedel-Crafts-Reaktion von $POCl_3$ mit Benzol und Halogenaromaten nicht oder jedenfalls praktisch nicht gelingt.

Die bekannten Verfahren zur Herstellung von Bis-(4-halogenphenyl)-phenyl-phosphansulfiden sind in verschiedener Hinsicht insbesondere für technische Belange nicht bzw. nicht ganz befriedigend. Die

vorerwähnte Grignard-Reaktion, ausgehend von Dichlor-phenyl-phosphan oder von Phenylphosphonsäuredichlorid und Halogenphenylmagnesiumhalogenid, ist technisch nicht ganz einfach durchführbar.

Die Priedel-Crafts-Reaktion gemäß DE-PS 1 238 024, ausgehend von $PSCl_3$ und Halogenbenzol, führt - ausweislich der Beispiele 7 bis 9 - jedenfalls im Falle des Einsatzes von Chlorbenzol als Halogenbenzol zu Ausbeuten von maximal nur etwa 63 % (Beispiel 8) an einem - wohl aus etwa gleichen Teilen bestehenden - Isomerengemisch aus Bis-(4-chlorphenyl)- und Bis-(2-chlorphenyl)-thiophosphinsäurechlorid. Das Bis-(4-chlorphenyl)-thiophosphinsäurechlorid ist erst die Vorstufe für das für den Polymerensektor gewünschte Bis-(4-chlorphenyl)-phenylphosphansulfid.

In dem Bestreben, ein verbessertes Verfahren zur Herstellung von Bis-(4-halogenphenyl)-phenylphosphansulfiden zu finden, wurde bereits vorgeschlagen, diese Aufgabe durch eine Weiterentwicklung des in der DE-PS 1 238 024 beschriebenen Verfahrens zu lösen(EP-OS 170 102). Gegenstand dieser Patentanmeldung ist ein Verfahren zur Herstellung tertiärer aromatischer Phosphansulfide der Formel

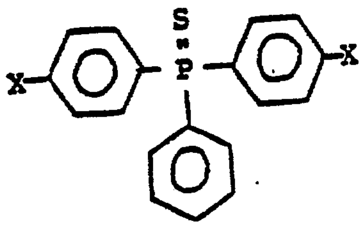

worin X = F, Cl oder Br,
durch Friedel-Crafts-Reaktion von P-Cl-Verbindungen mit Benzol und einem Halogenbenzol;
das Verfahren ist dadurch gekennzeichnet, daß man

a) Phosphortrichlorid $PCl_3$ mit einem Aluminiumhalogenid und Benzol im Molverhältnis von 1:etwa 1 bis 3,5:etwa 1 bis zur Beendigung der Reaktion erhitzt
und anschließend ohne Isolierung eines Zwischenproduktes
nach Zusatz einer - im Verhältnis zu $PCl_3$ - äquimolaren Menge elementaren Schwefels sowie der etwa 2 bis 10-fachen molaren Menge Halogenbenzol der Formel $C_6H_5X$, worin X die vorerwähnte Bedeutung hat, gegebenenfalls unter weiterem Zusatz von Aluminiumhalogenid (falls nicht schon anfangs ein Molverhältnis von $PCl_3$ Al-Halogenid = 1: etwa 2 - 3,5 eingesetzt wurde),
wiederum bis zur Beendigung der Reaktion erhitzt und das Reaktionsprodukt wie üblich aufarbeitet, oder

b) Phosphorthiochlorid $PSCl_3$, Aluminiumhalogenid und ein Halogenbenzol der Formel $C_6H_5X$, worin X die vorerwähnte Bedeutung besitzt, im Molverhältnis 1: etwa 1 - 3,5: 2 bis zur Beendigung der Reaktion erhitzt
und anschließend ohne Isolierung eines Zwischenproduktes
nach Zusatz einer - im Verhältnis zu $PSCl_3$ etwa 1 bis 10-fachen molaren Menge Benzol wiederum bis zur Beendigung der Reaktion erhitzt
und den Reaktionsansatz wie üblich aufarbeitet.

Den Reaktionen a) und b) liegen folgende Reaktionsgleichungen zugrunde:

a) $$PCl_3 + C_6H_6 \xrightarrow{\text{Al-Halogenid}} C_6H_5PCl_2 + HCl$$

$$S + C_6H_5PCl_2 + 2C_6H_5X \xrightarrow{\text{Al-Halogenid}} C_6H_5P(S)(C_6H_4X)_2 + 2HCl$$

b) $$PSCl_3 + 2C_6H_5X \xrightarrow{\text{Al-Halogenid}} (C_6H_4X)_2P(S)Cl + 2HCl$$

$$(C_6H_4X)_2P(S)Cl+C_6H_6 \xrightarrow{\text{Al-Halogenid}} C_6H_5P(S)(C_6H_4X)_2+HCl$$

Nach diesem Verfahren (und zwar sowohl nach Variante a) als auch nach Variante b)) werden in weitaus überwiegendem Maß die Bis-(4-halogenphenyl)-phenyl-phosphansulfide – nämlich in Ausbeuten zwischen durchweg etwa 65 und 75% d.Th., bezogen auf das Ausgangs-$PCl_3$ bzw. $-P(S)Cl_3$ – und nur relativ wenig Isomere und andere Nebenprodukte in einer Art Eintopf-Reaktion (weil kein Zwischenprodukt isoliert wird) erhalten.

In weiterer Bearbeitung des Verfahrens der EP-OS 170 102 wurde nun gefunden, daß anstelle des unsubstituierten Benzols auch substituiertes Benzol ohne Nachteil einsetzbar ist, allerdings nicht in Variante a), sondern nur in Variante b).

Erfindungsgegenstand ist daher ein Verfahren zur Herstellung tertiärer aromatischer Phosphansulfide der Formel I

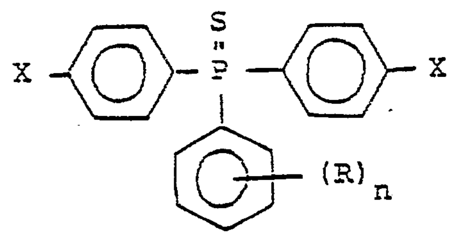

(I)

worin
X F, Cl oder Br,
R einen niederen Alkylrest mit 1 bis 5 C-Atomen, Aryl, Aryloxy, und/oder Aralkyl, zweckmäßig jeweils mit höchstens 2 aromatischen Kernen, und
n eine ganze Zahl von 1 bis 5 bedeuten, wobei die Summe der C-Atome $(R)_n$ zweckmäßig höchstens 12 ist, und wenn n größer als 1 ist, R gleiche oder verschiedene Reste bedeutet.

Das Verfahren ist dadurch gekennzeichnet, daß man Phosphorthiochlorid $PSCl_3$, ein Aluminiumhalogenid, in dem das Halogen bevorzugt Chlor und/oder Brom ist, und ein Halogenbenzol der Formel $C_6H_5X$, worin X die vorerwähnte Bedeutung besitzt, im Molverhältnis 1: (mindestens 1):(2 bis 2,5), vorzugsweise 1:(1 bis 3,5):(2 bis 2,5) erhitzt, und anschließend, ohne Isolierung eines Zwischenproduktes, eine – im Verhältnis zu $PSCl_3$ – ca. 1– bis 10–fache Menge eines Aromaten der Formel II (siehe Patentanspruch 1), worin R und n die vorerwähnte Bedeutung besitzen, zusetzt und wiederum bis zur Beendigung der Reaktion erhitzt, wobei vor oder während des Erhitzens weiteres Aluminiumhalogenid zugegeben werden kann, und daß man den Reaktionsansatz in üblicher Weise aufarbeitet.

Die der Reaktion zugrundeliegenden Reaktionsgleichungen sind:

$$PSCl_3 + 2\ C_6H_5X \xrightarrow{\text{Al-Halogenid}} (C_6H_4X)_2P(S)Cl + 2HCl$$

$$(C_6H_4X)_2P(S)Cl + \underset{\text{(II)}}{C_6H_{6-n}(R)_n} \xrightarrow{\text{Al-Halogenid}}$$

$$\longrightarrow \underset{\text{(I)}}{(C_6H_4X)_2\ P(S)(C_6H_{5-n}(R)_n)} + HCl$$

X, R und n besitzen die vorerwähnte Bedeutung.

Nach diesem Verfahren werden die Bis-(4-halogenphenyl)-aryl-phosphansulfide in Ausbeuten durchweg zwischen etwa 70 und 80 % d.Th., bezogen auf das Ausgangs-$PSCl_3$, und nur relativ wenig Isomere und andere Nebenprodukte in einer Art Eintopf-Reaktion (weil kein Zwischenprodukt isoliert wird) erhalten.

Dies ist sehr überraschend, weil etwa gemäß Beispiel 4 der DE-PS 1 238 034 durch Friedel-Crafts-Reaktion von $PSCl_3$ mit Toluol überwiegend ein Isomerengemisch der Tris-tolylphosphansulfide erhalten wird.

Der Erfolg des erfindungsgemäßen Verfahrens ist auch deswegen überraschend, weil man nach Variante a) des Verfahrens der EP-OS 170 102 - mit substituierten Aromaten der Formel II anstelle des unsubstituierten Benzols - eine unübersichtliche Isomerenverteilung im Endprodukt und eine unbe friedigende Ausbeute erhält, wie eigene Versuche ergeben haben.

Das erfindungsgemäße Verfahren geht aus von $PSCl_3$ oder einer äquimolaren Mischung aus $PCl_3$ und elementarem Schwefel (die in Gegenwart von Al-Halogenid $PSCl_3$ gibt), Al-Halogenid und Fluor-, Chlor- oder Brombenzol im Molverhältnis von normalerweise 1:(1 bis 3,5):(2 bis 2,5).

Als Aluminiumhalogenide werden z.B. $AlCl_3$, $AlBr_3$ oder Alkyl-Aluminiumchlorid oder -bromid eingesetzt; besonders bevorzugtes Aluminiumhalogenid ist $AlCl_3$.

Unter den Halogenbenzolen $C_6H_5X$ (X = F, Cl und Br) sind Fluor- oder Chlor-benzol bevorzugt.

Ein weiterer Überschuß an Al-Halogenid ist möglich, aber nicht vorteilhaft.

Die Reaktanten werden gemischt und bis zur Beendigung der Reaktion erhitzt. Die Reaktionstemperatur beträgt im allgemeinen 70 - 150°C und soll beim Einsatz von Chlor- oder Brombenzol etwa 150°C und beim Einsatz von Fluorbenzol etwa 120°C nicht überschreiten. Die Reaktionszeit beträgt im allgemeinen etwa 1 bis 10 Stunden. Es ist zweckmäßig, die Reaktion unter Inertgasatmosphäre (Stickstoff, Argon etc.) durchzuführen.

Nach beendetem ersten Reaktionsschritt wird zweckmäßig abgekühlt und mit etwa 1 bis 10 Mol, vorzugsweise etwa 3 bis 6 Mol, bezogen auf das Ausgangs-$PSCl_3$, eines Aromaten der Formel II, sowie gegebenenfalls mit Al-Halogenid versetzt.

Vorzugsweise beträgt die Gesamtmenge des eingesetzten Al-Halogenids (in beiden Reaktionsstufen) nicht wesentlich mehr als etwa 3,5 Mol/Mol $PSCl_3$.

Von den $C_3$-$C_5$-Alkylresten in der Formel II kommen insbesondere die verzweigten Reste infrage. Bevorzugt ist der aromatische Rest einkernig, d.h. daß der bevorzugte Arylrest der Phenylrest, der bevorzugte Aryloxyrest der Phenoxyrest und der bevorzugte Aralkylrest der Benzylrest ist.

Sämtliche Reste R können gegebenenfalls auch noch durch unter den Reaktionsbedingungen inerte Gruppen substituiert sein.

Besonders bevorzugte Aromaten der Formel II sind die Verbindungen a) mit R = $C_2H_5$, insbesondere $CH_3$ und n = 1 bis 4, sowie b) mit R = $C_6H_5$ oder $OC_6H_5$ und n = 1.

Beispielhafte Aromaten der Formel II - und zwar sowohl bevorzugte als auch nicht bevorzugte - sind Toluol, die verschiedenen Xylole, Trimethylbenzole, Tetramethylbenzole, insbesondere 1,2,4,5-Tetramethylbenzol, Pentamethylbenzyl, Äthylbenzol, Isopropylbenzol, Di-isopropylbenzol, tert.-Butylbenzol, Di-tert.butylbenzol, Tri-tert.-butylbenzol, Isoamylbenzol, Diphenyl, Terphenyl, Quaterphenyl, Triphenylbenzole, Diphenyläther, und Diphenylmethan. Mit kondensierten Aromaten (Naphthalin, Tetrahydronaphthalin, Anthrazen, Phenanthren, etc.) anstelle derjenigen der Formel II gelingt die erfindungsgemäße Reaktion zwar auch, jedoch nicht ganz so glatt.

Die Reaktionsmischung wird in der zweiten Stufe, vorzugsweise am Rückfluß, wiederum bis zur Beendigung der Reaktion erhitzt. Die Reaktionszeit liegt hier normalerweise zwischen etwa 8 und 20 Stunden.

Die Beendigung der einzelnen Teilreaktion des erfindungsgemäßen Verfahrens ist z.B. aus der Beendigung der Chlorwasserstoffentwicklung (siehe die Reaktionsgleichungen!) oder durch Verfolgung des Reaktionsfortgangs auf übliche Weise (z.B. mit chromatographischen Methoden) erkennbar.

In beiden Reaktionsstufen können auch inerte Lösungsmittel - insbesondere zwecks Regulierung der Reaktionstemperatur, wenn am Rückfluß erhitzt wird - eingesetzt werden. Solche inerte Lösungsmittel können z.B. sein aliphatische Kohlenwasserstoffe wie Petroläther, Hexan, Octan; cycloaliphatische Kohlenwasserstoffe, wie Cyclohexan; Hydroaromaten wie Dekahydronaphthalin, etc.

Die Aufarbeitung der anfallenden Reaktionsprodukte erfolgt im Prinzip nach üblichen Methoden. Dazu werden die resultierenden Reaktionsmischungen zweckmäßig unter Kühlung mit überschüssigem Wasser oder einer wäßrigen Mineralsäure (z.B. Salzsäure) zersetzt. Zur besseren Phasentrennung kann - falls nicht schon vorhanden - u.U. ein geeignetes organisches inertes Lösungsmittel zugesetzt werden, wofür auch die vorher genannten inerten Lösungsmittel in Frage kommen können. Die gesamte organische Phase wird nach der Trocknung einer Destillation unterworfen, falls Lösungsmittel oder überschüssiges Halogenbenzol bzw. Benzol abzutrennen ist. Die dabei anfallenden Destillationsrückstände stellen im wesentlichen die gewünschten Bis-(4-halogenphenyl)-aryl-phosphansulfide in roher Form dar. Deren Reinigung erfolgt in üblicher Weise zweckmäßig durch Destillation oder Umkristallisation. Die durch Destillation leicht abtrennbaren Thiophosphinsäurehalogenide (die unvollständigen Umsetzungen entstammen) können bei Wiederholungsansätzen wieder mitverwendet werden. Dadurch läßt sich die Gesamtausbeute noch steigern.

Die erfindungsgemäß erhältlichen Bis-(4-halogenphenyl)-aryl-phosphansulfide können in gleicher Weise verwendet werden wie die Bis-(4-halogenphenyl)-phenyl-phosphansulfide; bevorzugte Verwendung ist der Einsatz für die Herstellung von Polymeren (durch Umsetzung mit bestimmten Bisphenolen).

Die Bis-(4-halogenphenyl)-aryl-phosphansulfide der Formel I mit
X = F, Cl oder Br,
R = ($C_1$-$C_5$)-Alkyl, Phenyl, Phenoxy und/oder Benzyl und
n = 1 bis 5 sind neu.
Bevorzugt hierunter sind die Verbindungen mit X = F oder Cl und

a) R = $C_2H_5$ und insbesondere $CH_3$ und n = 1 bis 4 sowie
b) R = $C_6H_5$, $OC_6H_5$ und n = 1.

Die nachfolgenden Beispiele sollen der weiteren Erläuterung der Erfindung dienen. Auf die Erfindungsbeispiele (A) folgt noch ein Vergleichsbeispiel (B), welches zeigt, daß Variante a) des Verfahrens der EP-OS 170 102 - wenn man anstelle des unsubstituierten Benzols ein substituiertes Benzol (Toluol) verwendet - nur eine niedrige Ausbeute an dem gewünschten Isomeren ergibt.

A) Erfindungsbeispiele

1. Bis-(4-fluorphenyl)-(4-methylphenyl)-phosphansulfid und -oxid

Eine Mischung aus 127 g (0,75 Mol) $PSCl_3$, 1BO g (1,34 Mol) Aluminiumchlorid, 166 g (1,66 Mol) Fluorbenzol und 117 g Cyclohexan (Löse- und Verdünnungsmittel) wurde 8 Stunden am Rückfluß gekocht. Es wurde abgekühlt, 276 g (3 Mol) Toluol zugegeben und nochmals 5 Stunden am Rückfluß gekocht. Nach dem Abkühlen wurde unter Kühlung auf 650 g Wasser gegossen, die wäßrige Phase abgetrennt und nochmals mit Wasser nachgewaschen. Flüchtige Bestandteile wurden unter vermindertem Druck abgezogen. Es blieben 260 g eines hellen Öls zurück, die laut $^1H$- und $^{31}P$-NMR-Spektroskopie zu 85 % aus dem gewünschten Bis-(4-fluorphenyl)-4-methyl-phenyl-phosphansulfid bestanden.

Zur weiteren Charakterisierung wurde das Rohprodukt nach dem Verfahren der EP-OS 170 101 in das Phosphanoxid übergeführt. Dazu wurde in 315 g Essigsäure und 475 g Methanol gelöst und unter Rückflußbedingungen 90,4 g (0,93 Mol) 35 %iges Wasserstoffperoxid zugetropft. Es wurde abgekühlt, der Schwefel abfiltriert und das Gemisch unter vermindertem Druck eingedampft. Der Rückstand wurde mit 2N-NaOH aufgerührt, die organische Phase in der Wärme abgetrennt und nochmals mit Wasser gewaschen. Nach Kugelrohrdestillation bei 225°C/0,1 mbar wurden 224 g eines hellen Destillats erhalten, das langsam durchkristallisierte. Laut $^1H$-NMR, $^{31}P$-NMR und GC-Analyse bestand das Produkt aus:

2,94 % Tris-(4-fluorphenyl)-phosphanoxid,
87,22 % Bis-(4-fluorphenyl)-(4-methylphenyl)-phosphanoxid,
2,31 % } zweier anderer Bis-(fluorphenyl)-(methylphenyl)-
4,22 % } phosphanoxide,
1,00 % 4-Fluorphenyl-bis-(4-methylphenyl)-phosphanoxid und
2,31 % unbekannten Stoffen.

Dem entsprach eine Gesamtausbeute von 79,3 % an dem gewünschten Bis-(4-fluorphenyl)-(4-methylphenyl)-phosphanoxid.

Eine umkristallisierte Probe hatte den Schmelzpunkt 96-98°C.

2. Bis-(4-fluorophenyl)-(2,3,5,6-tetramethylphenyl)-phosphansulfid

Eine Mischung aus 63,5 g (0,375 Mol) $PSCl_3$, 90,0 g (0,675 Mol) $AlCl_3$, 80,0 g (0,832 Mol) Fluorbenzol und 58,0 g Cyclohexan (Löse- und Verdünnungsmittel) wurde 8 Stunden am Rückfluß gekocht. Es wurde abgekühlt, 200 g (1,49 Mol) 1,2,4,5-Tetramethylbenzol (Durol) und 40 g (0,30 Mol) $AlCl_3$ zugegeben und erneut 6 Stunden am Rückfluß gekocht.

Die erhaltene Lösung wurde unter Kühlung in eine Mischung aus 650 g Wasser und 216 g Toluol (als Verdünnungsmittel) getropft. Die organische Phase wurde abgetrennt, mit Wasser gewaschen und flüchtige Bestandteile bei einem Vakuum von 0,1 mbar bis zu einer Sumpftemperatur von 100°C entfernt. Man erhielt 130 g eines hellgelben, hochviskosen Rückstandes, der laut chromatographischen und $^1H$-NMR-spektroskopischen Untersuchungen praktisch ausschließlich Bis-(4-fluorphenyl)(2,3,5,6-tetramethylphenyl)-phosphansulfid darstellte. Dem entspricht eine Ausbeute von 89,7 %, bezogen auf eingesetztes Phosphorthiochlorid.

Zur weiteren Charakterisierung wurde eine Probe unter den in Beispiel 1 angegebenen Bedingungen in das Phosphanoxid überführt. Auf eine Destillation wurde verzichtet; stattdessen wurde aus Cyclohexan/Toluol umkristallisiert. Man erhielt Bis-(4-fluorphenyl)-(2,3,5,6-tetramethylphenyl)-phosphanoxid als weißes Pulver, Fp. 171-173°C.

B) Vergleichsbeispiel

Bis-(4-fluorphenyl)-(4-methylphenyl)-phosphanoxid

Das Vergleichsbeispiel wurde durchgeführt entsprechend Beispiel 2 = Variante a) des Verfahrens der EP-OS 170 102, jedoch mit Toluol anstelle von Benzol. 13,73 g (0,1 Mol) Phosphortrichlorid, 29,33 g (0,22 Mol) Aluminiumchlorid und 9,21 g (0,1 Mol) Toluol wurden 6 Stunden auf 80°C erwärmt. Es wurde abgekühlt, 3,2 g (0,1 Mol) Schwefel und 57,67 g (0,6 Mol) Fluorbenzol zugegeben und weitere 10 Stunden am Rückfluß gekocht. Die Reaktionsmischung wurde auf Eis gegossen, mit Methylenchlorid extrahiert

und die organische Phase abgetrennt. Nach Waschen mit Wasser wurden flüchtige Bestandteile am Rotationsverdampfer abgezogen und der Rückstand am Kugelrohr destilliert. Man erhielt 21 g eines gelben Öls, das zur besseren Charakterisierung nach dem Verfahren der EP-OS 170 101 in das Phosphanoxid überführt wurde.

Dazu wurde es in 100 g Eisessig gelöst. Dann wurden 8,5 g (0,0875 Mol) 35 %iges Wasserstoffperoxid bei 60°C langsam zugetropft und das Gemisch 1 Stunde bei 60°C nachgerührt. Laut Dünnschichtchromatogramm war kein Phosphansulfid mehr nachweisbar. Es wurde abgekühlt, Schwefel abfiltriert und das Filtrat eingedampft. Nach Verdünnung mit Methylenchlorid wurden saure Verunreinigungen mit 2N-Natronlauge ausgewaschen, Methylenchlorid unter vermindertem Druck abdestilliert und der Rückstand am Kugelrohr bei 225°C/0,1 mbar destilliert. Man erhielt 17 g eines braunen Harzes, das laut Gaschromatogramm nur zu 34,19 % aus dem gewünschten Bis-(4-fluorphenyl)-(4-methylphenyl)-phosphanoxid bestand. Dem entspricht eine Gesamtausbeute von 17,7 % d.Th., bezogen auf Phosphortrichlorid. Der Rest bestand aus Isomeren und unidentifizierten Produkten.

## Patentansprüche

1. Verfahren zur Herstellung tertiärer aromatischer Phosphansulfide der Formel I

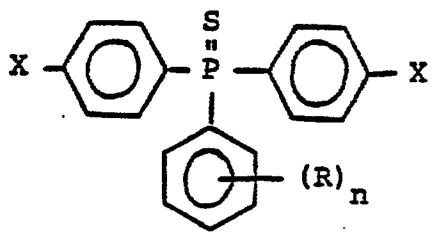

(I)

worin
X F, Cl oder Br,
R ein niederer Alkylrest mit 1 bis 5 C-Atomen, Aryl, Aryloxy, und/oder Aralkyl ist und
n eine ganze Zahl von 1 - 5 bedeutet, wobei, wenn n größer als 1 ist, R gleiche oder verschiedene Reste bedeutet,
dadurch gekennzeichnet, daß man Phosphorthiochlorid $PSCl_3$, ein Aluminiumhalogenid und ein Halogenbenzol der Formel $C_6H_5X$, worin X die vorerwähnte Bedeutung besitzt, im Molverhältnis 1:(mindestens 1):(2-2,5), erhitzt, und anschließend ohne Isolierung eines Zwischenproduktes eine - im Verhältnis zu $PSCl_3$ - ca. 1- bis 10-fache molare Menge eines Aromaten der Formel II

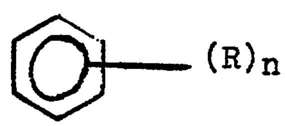

(II)

worin R und n die vorerwähnte Bedeutung besitzen, zusetzt und wiederum bis zur Beendigung der Reaktion erhitzt, wobei weiteres Aluminiumhalogenid zugegeben werden kann, und daß man den Reaktionsansatz in üblicher Weise aufarbeitet.

2. Verfahren nach Anspruch 1, dadurch gekennzeichnet, daß man als Aluminiumhalogenid Aluminiumbromid, vorzugsweise aber Aluminiumchlorid $AlCl_3$ verwendet, wobei das Molverhältnis des Aluminiumhalogenids zum $PSCl_3$ vorzugsweise im Bereich von 1 bis 3,5 liegt.

3. Verfahren nach Anspruch 1 oder 2, dadurch gekennzeichnet, daß man als Halogenbenzol $C_6H_5X$ Fluor- oder Chlorbenzol verwendet.

4. Verfahren nach einem oder mehreren der Ansprüche 1 - 3, dadurch gekennzeichnet, daß man Verbindungen der Formel II verwendet, in denen der Rest R höchstens 2 aromatische Kerne enthält.

5. Verfahren nach einem oder mehreren der Ansprüche 1 - 4, dadurch gekennzeichnet, daß man Verbindungen der Formel II verwendet, in denen die Summe der C-Atome in $(R)_n$ höchstens 12 ist.

6. Verfahren nach einem oder mehreren der Ansprüche 1 - 5, dadurch gekennzeichnet, daß man Verbindungen der Formel II verwendet, in denen in R $C_3$-$C_5$-Alkylreste verzweigt sind bzw. in denen der aromatische Rest einkernig ist.

7. Verfahren nach einem oder mehreren der Ansprüche 1 - 6, dadurch gekennzeichnet, daß man als Aromaten der Formel II Verbindungen mit a) R = $C_2H_5$ oder insbesondere $CH_3$ und n = 1 - 4 oder b) R = $C_6H_5$ oder $OC_6H_5$ und n = 1 verwendet.

8. Verfahren nach einem oder mehreren der Ansprüche 1 - 7, dadurch gekennzeichnet, daß die Reaktion bei einer Temperatur zwischen 70 und 150°C durchgeführt wird, wobei die Reaktionstemperatur beim Einsatz von Fluorbenzol zweckmäßig 120°C nicht überschreitet.

9. Verfahren nach einem oder mehreren der Ansprüche 1 - 8, dadurch gekennzeichnet, daß das Reaktionsgemisch nach der ersten Stufe abgekühlt und mit 1 bis 10 Mol, vorzugsweise 3 bis 6 Mol, bezogen auf das als Ausgangsmaterial verwendete $PSCl_3$, eines Aromaten der Formel II sowie gegebenenfalls mit zusätzlichem Aluminiumhalogenid versetzt wird.

10. Verfahren nach einem oder mehreren der Ansprüche 1 - 9, dadurch gekennzeichnet, daß die Reaktion unter Inertgasatmosphäre durchgeführt wird.

**Claims**

1. A process for the production of tertiary aromatic phosphane sulfides of the formula I

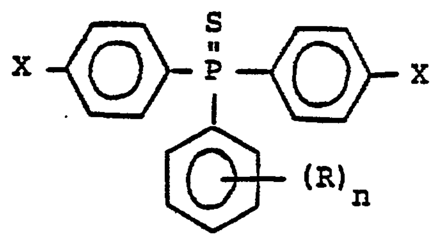

(I)

wherein
X is F, Cl or Br,
R is a lower alkyl group having 1 to 5 carbon atoms, a
an aryl, aryloxy and/or aralkyl group,
n is an integer from 1 to 5, whereby, in the case of n being greater than 1, the groups R are identical or different,
which comprises heating phosphorus thiochloride $PSCl_3$ with an aluminium halide and a halobenzene of the formula $C_6H_5X$, wherein X has the above-indicated meaning, in a molar ratio of 1:(at least 1):(2 to 2,5), and, without isolating an intermediate, adding an aromatic compound of the formula II

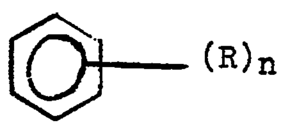

(II)

in which R and n have the above-indicated meaning, in an amount of about 1 to 10 moles per mole of $PSCl_3$, heating again until the reaction is complete, optionally with addition a further amount of aluminium halide, and working-up the reaction mixture in a conventional manner.

2. A process as claimed in claim 1, wherein the aluminium halide is aluminium bromide or, preferably, aluminium chloride $AlCl_3$, the molar ratio of aluminium halide to $PSCl_3$ being preferably in the range of 1:1 to 1:3,5.

3. A process as claimed in claim 1 or 2, wherein fluorobenzene or chlorobenzene are employed as halobenzene $C_6H_5X$.

4. A process as claimed in one or more of claims 1 to 3, wherein compounds of the formula II are employed, in which the group R contains at most 2 aromatic rings.

5. A process as claimed in one or more of claims 1 to 4, wherein compounds of the formula II are employed, in which the total number of carbon atoms in $(R)_n$ is at most 12.

6. A process as claimed in one or more of claims 1 to 5, wherein compounds of the formula II are employed, in which $C_3$–$C_5$-alkyl groups of R are branched or in which the aromatic radical is mononuclear.

7. A process as claimed in one or more of claims 1 to 6, wherein aromatic compounds of the formula II are employed in which a) R is ethyl or, in particular, methyl, and n is an integer, from 1 to 4, or b) R is phenyl or phenoxy and n is 1.

8. A process as claimed in one or more of claims 1 to 7, wherein the reaction is carried out at a temperature between 70 and 150°C, the reaction temperature suitably not exceeding 120°C when fluorobenzene is employed.

9. A process as claimed in one or more of claims 1 to 8, wherein the reaction mixture resulting from the first reaction stage is cooled and subsequently mixed with 1 to 10 moles, preferably 3 to 6 moles of an aromatic compound of the formula II and, optionally, with an additional amount of aluminium halide, the molar amounts being referred per mole of $PSCl_3$ used as starting material.

10. A process as claimed in one or more of claims 1 to 9, wherein the reaction is carried out under an atomophere of an inert gas.

## Revendications

1. Procédé pour préparer des sulfures de phosphanes aromatiques tertiaires répondant à la formule I:

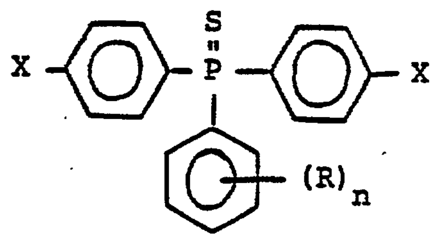

(I)

dans laquelle
X représente F, Cl ou Br,
R représente un alkyle inféreiur contenant de 1 à 5 atomes de carbone, un aryle, un aryloxy et/ou un aralkyle, et
n représente un nombre entier de 1 à 5, les radicaux R, dans le cas où n est supérieur à l, étant identiques les uns aux autres ou différents les uns des autres,
porcédé carctérisé en ce qu'on chauffe le thiochlorure de phosphore $PSCl_3$, un halogénure d'aluminium et un halogénobenzène de formule $C_6H_5X$ dans lequel X a la signification qui a été donnée ci-dessus, dans un rapport molaire de 1:(au moins 1):(2 à 2,5), puis, sans isoler un corps intermédiaire, on ajoute une quantité représentant d'environ 1 à 10 fois la quantité molaire – par rapport à $PSCl_3$ – d'un composé aromatique répondant à la formule II:

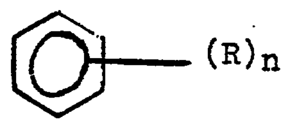

(II)

dans laquelle R et n ont les significations qui ont été données ci-dessus, on chauffe à nouveau jusqu'à ce que la réaction soit terminée, éventuellement avec addition d'une quantité supplémentaire d'halogénure d'aluminium, et on soumet le mélange réactionnel à un traitement complémentaire effectué de la manière habituelle.

2. Procédé selon la revendication 1, caractérisé en ce qu'on utilise, comme halogénure d'aluminium, le bromure d'aluminium ou, mieux encore, le chlorure d'aluminium $AlCl_3$, le rapport molaire de l'halogénure d'aluminium à $PSCl_3$ étant de préférence compris entre 1 et 3,5.

3. Procédé selon l'une des revendications 1 et 2, caractérisé en ce qu'on utilise, comme halogénobenzène $C_6H_5X$, le fluorobenzène ou le chlorobenzène.

4. Procédé selon l'une quelconque des revendications 1 à 3, caractérisé en ce qu'on utilise des composés de formule II dans lesquels le radical R contient au plus deux noyaux aromatiques.

5. Procédé selon l'une quelconque des revendications 1 à 4, caractérisé en ce qu'on utilise des composés de formule II dans lesquels la somme des atomes de carbone contenus dans $(R)_n$ est d'au plus 12.

6. Procédé selon l'une quelconque des revendications 1 à 5, caractérisé en ce qu'on utilise des composés de formule II dans lesquels les radicaux alkyles en $C_3$–$C_5$ que représente R sont ramifiés, ou dans lesquels le radical aromatique ne comporte qu'un seul noyau.

7. Procédé selon l'une quelconque des revendications 1 à 6, caractérisé en ce qu'on utilise, comme composés aromatiques de formule II, a) des composés dans lesquels R représente $C_2H_5$ ou, mieux, $CH_3$, et n représente un nombre de 1 à 4, ou b) des composés dans lesquels R représente $C_6H_5$ ou $OC_6H_5$ et n est égal à 1.

8. Procédé selon l'une quelconque des revendications 1 à 7, caractérisé en ce qu'on effectue la réaction à une température comprise entre 70 et 150°C, avantageusement à une température ne dépassant pas 120°C dans le cas où l'on utilise le fluorobenzène.

9. Procédé selon l'une quelconque des revendications 1 à 8, caractérisé en ce qu'on refroidit le mélange réactionnel après la première étape et on y ajoute de 1 à 10 mol, de préférence de 3 à 6 mol, par rapport au $PSCl_3$ utilisé comme corps de départ, d'un composé aromatique de formule II, et éventuellement une quantité supplémentaire d'halogénure d'aluminium.

10. Procédé selon l'une quelconque des revendications 1 à 9, caractérisé en ce qu'on effectue la réaction sous un gaz inerte.